# EUROPEAN PATENT APPLICATION

(11) **EP 4 274 308 A1**
(43) Date of publication of application: **08.11.2023**
(21) Application number: 21921800.5
(22) Date of filing: 28.01.2021
(51) Int. Cl.: H04W 48/16

(54) **METHOD AND APPARATUS FOR ACCESSING NETWORK**

(71) Applicant: Huawei Technologies Co., Ltd., Shenzhen, Guangdong 518129 (CN)
(72) Inventor: WANG, Yuan, Shenzhen, Guangdong 518129 (CN); GUO, Longhua, Shenzhen, Guangdong 518129 (CN); ZHU, Hualin, Shenzhen, Guangdong 518129 (CN); CHEN, Zhongping, Shenzhen, Guangdong 518129 (CN)
(74) Representative: MERH-IP Matias Erny Reichl Hoffmann Patentanwälte PartG mbB
(86) International application number: PCT/CN2021/074172
(87) International publication number: WO 2022/160183

(57) **Abstract**

This application relates to the communication field, and provides a network access method and apparatus. The method includes: A terminal device receives a broadcast message from an access network device, where the broadcast message includes identification information of one or more CAGs supported by a first cell and a default network access indication, and the default network access indication indicates that the first cell can be accessed in a default access manner. When a first CAG list does not include the identification information of the one or more CAGs supported by the first cell, the terminal device accesses the first cell in the default access manner, where the first CAG list is a list, stored in the terminal device, of identification information of a CAG that is allowed to be accessed. According to the method, a core network device broadcasts a default network access indication, to provide an entry for the terminal device to access a network, so that the terminal device can access the network through the entry, thereby preventing a case in which the terminal device cannot access the network and therefore cannot update a local CAG list.

## Description

### TECHNICAL FIELD

This application relates to the communication field, and in particular, to a network access method and apparatus.

### BACKGROUND

A non-public network (non-public network, NPN) is a network that is provided for a specific user and that is defined in the 3rd generation partnership project (3rd generation partnership project, 3GPP) standard. A closed access group (closed access group, CAG) is defined in the non-public network. The CAG indicates a group of users who can access one or more cells. The CAG may be used for access control of access of a terminal device to the non-public network, to ensure security of the non-public network.

Usually, the terminal device may store a CAG list that is allowed to be accessed (allowed CAG list) (for ease of description, which is referred to as an allowed CAG list for short below). The terminal device may select a corresponding network to access based on the list. The allowed CAG list of the terminal device is also stored in subscription data of the terminal device on a network side.

In some cases, when a CAG terminal performs subscription update, a terminal device that supports the CAG cannot normally access a network that supports the CAG.

### SUMMARY

This application provides a network access method and apparatus, to provide an entry for a terminal device that supports a closed access group (closed access group, CAG) to temporarily access a network, so that the terminal device can update a local allowed CAG list in time, thereby preventing poor user experience caused by failure in network access.

According to a first aspect, this application provides a network access method. The method may be performed by a terminal device or a component (for example, a chip or a chip system) configured in the terminal device. This is not limited in this embodiment of this application. For ease of understanding, the following describes the method by using the terminal device as an execution body.

For example, the method includes: The terminal device receives a broadcast message from an access network device, where the broadcast message includes identification information of one or more CAGs supported by a first cell and a first default network access indication, and the first default network access indication indicates that the first cell can be accessed in a default access manner. When a first CAG list does not include the identification information of the one or more CAGs supported by the first cell, the terminal device accesses the first cell based on the first default network access indication, where the first CAG list is a list, stored in the terminal device, of identification information of a CAG that is allowed to be accessed.

According to the technical solutions, the access network device broadcasts the first default network access indication, to provide an entry for the terminal device to access the first cell. When the terminal device is set to a CAG-only state, but cannot access the network by using a CAG ID, the terminal device may access the first cell in the default access manner, and further access a network, to obtain an allowed CAG list in a subscription database, so as to complete local configuration update. This can prevent a case in which the terminal device cannot access the network caused by asynchronization between the allowed CAG list of the terminal device and the allowed CAG list in the subscription database, enable the terminal device to update a local allowed CAG list in time, and prevent poor user experience caused by failure in network access.

In addition, the default access manner of the first cell is provided for the terminal device, so that the terminal device does not need to attempt to access the network by using a non-CAG cell. This can prevent a non-public network (non-public network, NPN) from being accessed by an unauthorized user by using the non-CAG cell, and improve security of the non-public network.

It should be understood that the default network access indication and default access are merely possible expressions. Essentially, the default network access indication may provide an entry for the terminal device to access a network. Descriptions of the default network access indication and default access are merely for ease of distinguishing from a manner of accessing a network by using a CAG, and should not constitute any limitation on this application. For example, the default network access indication may also be referred to as a temporary network access indication, and default access may also be referred to as temporary access. This application includes but is not limited to what is described herein.

With reference to the first aspect, in some possible implementations of the first aspect, if the default access manner is a manual selection access manner, that the terminal device accesses the first cell based on the first default network access indication includes: The terminal device displays, based on the first default network access indication through a user interface, identification information of a network that can be selected, and accesses the first cell in response to a user operation. Optionally, an identifier of the network that can be selected includes a dedicated CAG ID for default access or an HRNN associated with identifier information of a dedicated CAG for default access.

The terminal device may display, to the user through the user interface, the identifier of the network that can be selected, so that a user selects whether to access the first cell in the default access manner.

With reference to the first aspect, in some possible implementations of the first aspect, the method further includes: The terminal device receives a second CAG list from an access and mobility management function (access and mobility management function, AMF) network element, where the second CAG list is a list, stored in a subscription database, of identification information of a CAG that the terminal device is allowed to access; and updates the first CAG list based on the second CAG list.

In a possible design, the terminal device sends a registration request message to the AMF, to initiate a registration procedure. The AMF may obtain the second CAG list of the terminal device from the subscription database based on the registration request message.

That the terminal device receives a second CAG list from an AMF may include two cases. In a first possible case, the terminal device receives the second CAG list from a registration accept message. In a second possible case, the terminal device receives the second CAG list from a registration reject message.

In the first possible case, that the terminal device receives a second CAG list from an AMF includes: The terminal device receives the registration accept message from the AMF, where the registration accept message carries the second CAG list.

After receiving the registration request message from the terminal device, the AMF may perform a corresponding operation to perform registration based on a registration procedure in the conventional technology. The AMF may also obtain the second CAG list from the subscription database based on the registration request message. The AMF may determine whether the second CAG list includes the identification information of the CAG supported by the first cell. When the second CAG list includes the identification information of the CAG supported by the first cell, the AMF sends the registration accept message to the terminal device, where the registration accept message carries the second CAG list.

In the second possible case, that the terminal device receives a second CAG list from an AMF includes: The terminal device receives the registration reject message from the AMF, where the registration reject message carries the second CAG list.

After receiving the registration request message from the terminal device, the AMF may perform a corresponding operation to perform registration based on a registration procedure in the conventional technology. In addition, the AMF may also obtain the second CAG list from the subscription database based on the registration request message. The AMF may determine whether the second CAG list includes the identification information of the CAG supported by the first cell. When the second CAG list does not include the identification information of the CAG supported by the first cell, the AMF sends the registration reject message to the terminal device, where the registration reject message carries the second CAG list.

Based on the foregoing process, regardless of whether the registration request message of the terminal device is accepted, the terminal device receives the second CAG list from the AMF, and updates the locally configured CAG list based on the second CAG list, to access a network and update a local CAG list.

In another possible design, the terminal device sends a registration request message to the AMF, where the registration request message carries a second default network access indication, and the second default network access indication indicates that the terminal device accesses the first cell in the default access manner.

Because the registration request message carries the second default network access indication, after receiving the registration request message from the terminal device, the AMF may skip a security authentication procedure based on the second default network access indication carried in the registration request message, directly obtain the second CAG list from the subscription database, and send the second CAG list to the terminal device.

In this case, that the terminal device receives a second CAG list from an AMF includes: The terminal device receives a registration reject message from the AMF, where the registration reject message carries the second CAG list.

Based on the foregoing process, the terminal device can more quickly obtain the second CAG list in the subscription database, and further perform local configuration update.

Optionally, the method further includes: The terminal device selects a second cell based on a cell reselection procedure; and when the second CAG list includes identification information of at least one CAG supported by the second cell, accesses the second cell, and initiates a registration procedure.

When the second CAG list does not include the identification information of the CAG supported by the first cell, the terminal device may alternatively initiate a cell reselection procedure, to select a new CAG to access the network.

With reference to the first aspect, in some possible implementations of the first aspect, the method further includes: When the first CAG list includes the identification information of the one or more CAGs supported by the first cell, and the terminal device is set to a manual selection mode, the terminal device displays, based on the identification information of the one or more CAGs through a user interface, identification information of one or more networks that can be manually selected; and accesses the first cell in response to a user operation.

Optionally, an identifier of the network that can be selected includes a dedicated CAG ID for default access or an HRNN associated with identifier information of a dedicated CAG for default access.

When the first CAG list includes the identification information of the one or more CAGs supported by the first cell, and the terminal device is set to a manual selection mode, the terminal device may alternatively display, through the user interface, identification information of the network that can be manually selected.

Therefore, regardless of whether the first CAG list includes the identification information of the CAG supported by the first cell, the terminal device may display, to the user through the user interface, a network that can be selected, so that the user can choose whether to access the network.

Based on the foregoing content, when a cell on which the terminal device camps changes, the terminal device may be directly set to the manual selection mode, and the user may access the network by using the identification information of the CAG that is allowed to be accessed or identification information, provided by the access network device, of a dedicated CAG for manual selection. Therefore, when the first CAG list includes the identification information of the one or more CAGs supported by the first cell, the terminal device can access the network only by broadcasting the first default network access indication. This prevents a case in which the user cannot select another accessible network, and improves user experience.

According to a second aspect, this application provides a network access method. The method may be performed by an access network device or a component (for example, a chip or a chip system) configured in the access network device. This is not limited in this embodiment of this application. For ease of understanding, the following describes the method by using the access network device as an execution body.

For example, the method includes: The access network device sends a broadcast message, where the broadcast message includes identification information of one or more CAGs supported by a first cell and a first default network access indication, the first default network access indication indicates that the first cell can be accessed in a default access manner, and the first cell is a cell served by the access network device.

According to the technical solutions, the access network device broadcasts the first default network access indication, to provide an entry for a terminal device to access the first cell. When the terminal device is set to a CAG-only state, but cannot access the network by using a CAG ID, the terminal device may access the first cell in the default access manner, and further access a network, to obtain an allowed CAG list in a subscription database, so as to complete local configuration update. This can prevent a case in which the terminal device cannot access the network caused by asynchronization between the allowed CAG list of the terminal device and the allowed CAG list in the subscription database, enable the terminal device to update a local allowed CAG list in time, and prevent poor user experience caused by failure in network access.

In addition, the default access manner of the first cell is provided for the terminal device, so that the terminal device does not need to attempt to access the network by using a non-CAG cell. This can prevent a non-public network from being accessed by an unauthorized user by using the non-CAG cell, and improve security of the non-public network.

With reference to the second aspect, in some possible implementations of the second aspect, the method further includes: The access network device receives a registration request message from a terminal device, where the registration request message carries a second default network access indication, and the second default network access indication indicates that the terminal device accesses the first cell in the default access manner; and forwards the registration request message to an AMF.

Because the registration request message carries the second default network access indication, after receiving the registration request message from the terminal device, the AMF may skip a security authentication procedure based on the second default network access indication carried in the registration request message, directly obtain a second CAG list from the subscription database, and send the second CAG list to the terminal device. Therefore, the terminal device can more quickly obtain the second CAG list in the subscription database, and further perform local configuration update.

With reference to the first aspect or the second aspect, in some possible implementations, the first default network access indication includes identification information of a dedicated CAG for default network access.

Optionally, the identification information of the dedicated CAG for default network access is a dedicated CAG ID for default network access.

Optionally, the identification information of the dedicated CAG for default network access is a human-readable network name (human-readable network name, HRNN).

The foregoing listed identification information of the dedicated CAG for default network access is merely an example, and shall not constitute any limitation on this application. This application includes but is not limited to what is described herein.

According to a third aspect, this application provides a network access method. The method may be performed by a network element of a core network device or a component (for example, a chip or a chip system) configured in the network element of the core network device. This is not limited in this embodiment of this application. For ease of understanding, the following describes the method by using an access and mobility management function AMF network element of the core network device as an execution body.

For example, the method includes: The access and mobility management function AMF network element receives a registration request message from a terminal device. The registration request message carries a second default network access indication, and the second default network access indication indicates that the terminal device accesses a first cell in a default access manner. The AMF obtains a second CAG list of the terminal device from a subscription database based on the registration request message, where the second CAG list includes identification information of a CAG that the terminal device is allowed to access. The AMF sends a registration reject message to the terminal device, where the registration reject message carries the second CAG list.

According to the solutions, the AMF receives the registration request from the terminal device, obtains the second CAG list of the terminal device from the subscription database, skips a normal registration procedure, and sends the registration reject message to the terminal device. The registration reject message carries the second CAG list. This can reduce steps of the AMF, avoid unnecessary resource waste caused by a registration procedure, and help the terminal device update a local allowed CAG list in time.

With reference to the foregoing aspects, in some possible implementations, the second default network access indication includes identification information of a dedicated CAG for default network access.

Optionally, the identification information of the dedicated CAG for default network access is a dedicated CAG ID for default network access.

Optionally, the identification information of the dedicated CAG for default network access is an HRNN.

The foregoing listed identification information of the dedicated CAG for default network access is merely an example, and shall not constitute any limitation on this application. This application includes but is not limited to what is described herein.

According to a fourth aspect, this application provides a network access apparatus. The apparatus may be a terminal device or a component in the terminal device.

In a design, the apparatus may include a module that one-to-one corresponds to the method/operation/step/action in the first aspect. The module may be a hardware circuit or software, or may be implemented by a hardware circuit in combination with software.

In a design, the apparatus may include a transceiver module and a processing module.

For example, the transceiver module may be configured to receive a broadcast message from an access network device, where the broadcast message includes identification information of one or more closed access groups CAGs supported by a first cell and a first default network access indication, and the first default network access indication indicates that the first cell can be accessed in a default access manner. The processing module may be configured to: when a first CAG list does not include the identification information of the one or more CAGs supported by the first cell, access the first cell based on the first default network access indication, where the first CAG list is a list, stored in the terminal device, of identification information of a CAG that is allowed to be accessed.

According to a fifth aspect, this application provides a network access apparatus. The apparatus may be an access network device or a component in the access network device.

In a design, the apparatus may include a module that one-to-one corresponds to the method/operation/step/action in the second aspect. The module may be a hardware circuit or software, or may be implemented by a hardware circuit in combination with software.

In a design, the apparatus may include a transceiver module and a processing module.

For example, the processing module may be configured to generate a broadcast message, where the broadcast message includes identification information of one or more CAGs supported by a first cell and a first default network access indication, the first default network access indication indicates that the first cell can be accessed in a default access manner, and the first cell is a cell served by the access network device. The transceiver module may be configured to send the broadcast message.

According to a sixth aspect, this application provides a network access apparatus. The apparatus may be a core network device, for example, an AMF, or a component in the core network device.

In a design, the apparatus may include a module that one-to-one corresponds to the method/operation/step/action in the third aspect. The module may be a hardware circuit or software, or may be implemented by a hardware circuit in combination with software.

In a design, the apparatus may include a transceiver module and a processing module.

For example, the transceiver module may be configured to: receive a registration request message from a terminal device, where the registration request message carries a second default network access indication, and the second default network access indication indicates that the terminal device accesses a first cell in a default access manner; and obtain a second closed access group CAG list of the terminal device from a subscription database based on the registration request message, where the second CAG list includes identification information of a CAG that the terminal device is allowed to access. The processing module may be configured to generate a registration reject message to the terminal device, where the registration reject message carries the second CAG list. The transceiver module may further be configured to send the registration reject message to the terminal device.

According to a seventh aspect, an embodiment of this application provides a network access apparatus. The apparatus includes a processor, configured to implement the method in any implementation in the first aspect to the third aspect. The apparatus may further include a memory, configured to store instructions and data. The memory is coupled to the processor, and when the processor executes the instructions stored in the memory, the method in any implementation in the first aspect to the third aspect may be implemented. The apparatus may further include a communication interface. The communication interface is used by the apparatus to communicate with another device. For example, the communication interface may be a transceiver, a circuit, a bus, a module, or another type of communication interface, and the another device may be an access network device.

According to an eighth aspect, an embodiment of this application further provides a computer-readable storage medium including instructions. When the instructions are run on a computer, the computer is enabled to perform the method in any implementation in the first aspect to the third aspect.

According to a ninth aspect, an embodiment of this application provides a chip system. The chip system includes a processor and may further include a memory, and is configured to implement a function of the terminal device in the foregoing method. The chip system may include a chip, or may include a chip and another discrete component.

According to a tenth aspect, an embodiment of this application provides a chip system. The chip system includes a processor and may further include a memory, and is configured to implement a function of the access network device in the foregoing method. The chip system may include a chip, or may include a chip and another discrete component.

According to an eleventh aspect, an embodiment of this application provides a chip system. The chip system includes a processor and may further include a memory, and is configured to implement a function of the access and mobility management function AMF network element in the foregoing method. The chip system may include a chip, or may include a chip and another discrete component.

According to a twelfth aspect, an embodiment of this application provides a communication system. The communication system includes the access network device and the core network device.

According to a thirteenth aspect, an embodiment of this application provides a computer program product. The computer program product includes instructions. When the instructions are run on a computer, the computer is enabled to perform the method in any implementation in the first aspect to the third aspect.

It should be understood that technical solutions in the fourth aspect to the twelfth aspect in embodiments of this application correspond to technical solutions in the first aspect to the third aspect in embodiments of this application, and beneficial effect achieved by the aspects and corresponding feasible implementations are similar. Details are not described again.

### BRIEF DESCRIPTION OF DRAWINGS

FIG. 1 is a schematic diagram of a network architecture applicable to a network access method according to an embodiment of this application;
FIG. 2 is a schematic flowchart in which a terminal device requests to update an allowed CAG list;
FIG. 3 is a diagram of a scenario in which a terminal device cannot access a network according to an embodiment of this application;
FIG. 4 to FIG. 6 are schematic flowcharts of network access methods according to an embodiment of this application;
FIG. 7 and FIG. 8 are schematic block diagrams of network access apparatuses according to an embodiment of this application;
FIG. 9 is a schematic diagram of a structure of a terminal device according to an embodiment of this application; and
FIG. 10 is a schematic diagram of a structure of an access network device according to an embodiment of this application.

### DESCRIPTION OF EMBODIMENTS

The following describes technical solutions of this application with reference to the accompanying drawings.

Technical solutions provided in this application may be applied to various communication systems, for example, a 5th generation (5th generation, 5G) mobile communication system or a new radio access technology (new radio access technology, NR). The 5G mobile communication system may include non-standalone (non-standalone, NSA) networking and/or standalone (standalone, SA) networking.

The technical solutions of this application may further be applied to machine-type communication (machine type communication, MTC), a long-term evolution-machine (Long-Term Evolution-machine, LTE-M) technology, a device-to-device (device-to-device, D2D) network, a machine-to-machine (machine-to-machine, M2M) network, an Internet of things (Internet of things, IoT) network, or another network. The IoT network may include, for example, the Internet of vehicles. A communication manner in an Internet of vehicles system is collectively referred to as vehicle-to-everything (vehicle-to-X, V2X, where X may represent anything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like.

The technical solutions of this application may further be applied to a future communication system, for example, a 6th generation mobile communication system. This is not limited in this application.

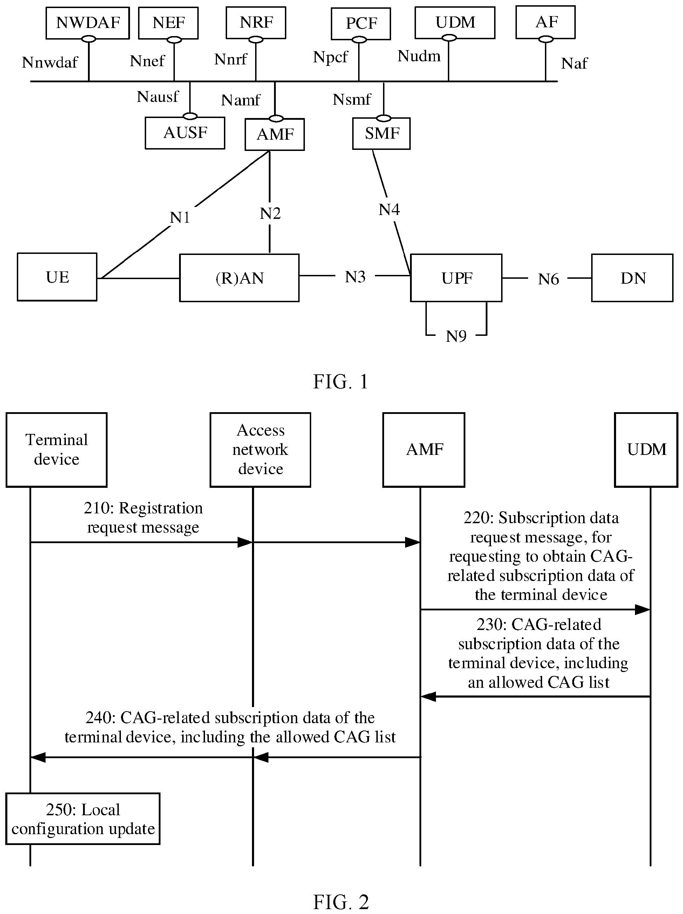

FIG. 1 is a schematic diagram of a network architecture applicable to a network access method according to an embodiment of this application. As shown in FIG. 1, the network architecture is, for example, a 5G system (the 5th generation system, 5GS) defined in the 3GPP protocol TS 23.501. The network architecture may be divided into two parts: an access network (access network, AN) and a core network (core network, CN). The access network may be configured to implement functions related to radio access. The core network mainly includes the following several key logical network elements: an access and mobility management function (access and mobility management function, AMF) network element, a session management function (session management function, SMF) network element, a user plane function (user plane function, UPF) network element, a policy control function (policy control function, PCF) network element, an authentication server function (authentication server function, AUSF) network element, a unified data management (unified data management, UDM) network element, and the like.

The following briefly describes the network elements shown in FIG. 1.
1. User equipment (user equipment, UE) may be referred to as a terminal device, an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data connectivity for a user, for example, a handheld device with a wireless connection function or a vehicle-mounted device. Currently, some terminals may be, for example, a mobile phone (mobile phone), a tablet (pad), a computer with a wireless transceiver function (for example, a laptop computer or a palmtop), a mobile Internet device (mobile Internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a future 5G network or a terminal device in a future evolved public land mobile network (public land mobile network, PLMN), and the like.

In addition, the terminal device may be a terminal device in an Internet of things (Internet of things, IoT) system. IoT is an important part of future development of information technologies. A main technical feature of the IoT is connecting a thing to a network by using a communication technology, to implement an intelligent network for interconnection between a person and a machine or between things. An IoT technology may implement massive connections, deep coverage, and terminal power saving by using, for example, a narrow band (narrow band, NB) technology.

In addition, the terminal device may further include a sensor such as an intelligent printer, a train detector, or a gas station. Main functions of the terminal device include collecting data (for some terminal devices), receiving control information and downlink data from a network sending an electromagnetic wave, and sending uplink data to the network device.

2. An access network (access network, AN) may provide a network access function for an authorized user in a specific area, and can use transmission tunnels of different quality based on a user level, a service requirement, and the like. The access network may be an access network using different access technologies. Currently, there are two types of radio access technologies: a 3GPP access technology (for example, a radio access technology used in a 3G, 4G or 5G system) and a non-3GPP (non-3GPP) access technology. The 3GPP access technology is an access technology that complies with the 3GPP standard specification. For example, an access network device in the 5G system is referred to as a next generation node base station (next generation Node Base station, gNB). The non-3GPP access technology is an access technology, for example, an air interface technology represented by an access point (access point, AP) in wireless fidelity (wireless fidelity, Wi-Fi), that does not comply with the 3GPP standard specification.

An access network that implements an access network function based on a wireless communication technology may be referred to as a radio access network (radio access network, RAN). The radio access network can manage a radio resource, provide an access service for the terminal device, and forward a control signal and user data between the terminal and the core network.

For example, the radio access network may include but is not limited to a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), an AP, a wireless relay node, a wireless backhaul node, and a transmission point (transmission point, TP) or a transmission and reception point (transmission and reception point, TRP) in a Wi-Fi system, a gNB in a 5G (for example, NR) system, a transmission point (TRP or TP), one antenna panel or a group of antenna panels (including a plurality of antenna panels) of a base station in a 5G system, a network node that forms a gNB or a transmission point, for example, a baseband unit (BBU) or a distributed unit (distributed unit, DU), or a base station in a next generation 6G communication system. A specific technology and a device form of the radio access network device are not limited in this embodiment of this application.

The access network can provide a service for a cell. The terminal device may communicate with the cell by using a transmission resource (for example, a frequency domain resource or a spectrum resource) allocated by the access network device.
3. An access and mobility management function (AMF) network element is mainly configured for mobility management, access management, and the like, for example, user location update, registration with a network by a user, and a user handover. The AMF may further be configured to implement another function in a mobility management entity (mobility management entity, MME) other than session management, for example, a lawful interception function or an access authorization (or authentication) function.
4. A session management function (SMF) network element is mainly configured to: manage a session, allocate and manage an Internet protocol (Internet Protocol, IP) address of UE, select a termination point that can manage a user plane function and a policy control and charging function interface, notify downlink data, and the like. In this embodiment of this application, the SMF is mainly responsible for session management in a mobile network, for example, session establishment, modification, and release. The specific function may include, for example, allocating an IP address to the terminal device, selecting a UPF that provides a packet forwarding function, and the like.
5. A user plane function (UPF) network element is a data plane gateway. The user plane function network element may be used for packet routing and forwarding, quality of service (quality of service, QoS) processing of user plane data, or the like. User data may access a data network (data network, DN) by using the network element. In this embodiment of this application, the user plane function network element may be configured to implement a function of the user plane gateway.
6. A data network (DN) is an operator network for providing a data service for a user, for example, a network of an operator service, the Internet (Internet), a third-party service network, or an IP multi-media service (IP multi-media service) network.
7. An authentication service network element (AUSF) is mainly used for user authentication and the like.
8. A network data analytics function (network data analytics function, NWDAF) network element is configured to collect and analyze network data, and the like.
9. A network exposure function (network exposure function, NEF) network element is configured to securely open, to the outside, a service, a capability, and the like that are provided by a 3GPP network function.
10. A network repository function (network function (NF) repository function, NRF) network element is configured to store description information of a network function entity and description information of a service provided by the network function entity, and support service discovery, network element entity discovery, and the like.
11. A policy control function (PCF) network element is configured to guide a unified policy framework of network behavior, provide policy rule information for a control plane function network element (for example, the AMF or SMF network element), and the like.
12. A unified data management (UDM) network element is configured to store user data, for example, subscription information and authentication/authorization information.
13. An application function (application function, AF) network element is responsible for providing a service for a 3 GPP network, for example, affecting service routing, interacting with a PCF to perform policy control, and the like.

In the network architecture shown in FIG. 1, network elements may communicate with each other through an interface shown in the figure. As shown in the figure, an N1 interface is a reference point between the terminal device and the AMF. An N2 interface is a reference point between the RAN and the AMF, and is configured to send a non-access stratum (non-access stratum, NAS) message and the like. An N3 interface is a reference point between the RAN and the UPF, and is configured to transmit user plane data and the like. An N4 interface is a reference point between the SMF and the UPF, and is configured to transmit information such as tunnel identifier information of an N3 connection, data buffer indication information, and a downlink data notification message. An N6 interface is a reference point between the UPF and the DN, and is configured to transmit the user plane data and the like. Relationships between other interfaces and network elements are shown in FIG. 1. For brevity, details are not described herein.

It should be understood that the network architecture applied to embodiments of this application is merely an example of a network architecture described from perspectives of a conventional point-to-point architecture and a service-oriented architecture, and a network architecture applicable to embodiments of this application is not limited thereto. Any network architecture that can implement functions of the network elements is applicable to embodiments of this application.

It should further be understood that the AMF, the SMF, the UPF, and the network slice selection function (network slice selection function, NSSF) network element, the NWDAF, the NEF, the AUSF, an NRF, the PCF, and the UDM shown in FIG. 1 may be understood as network elements configured to implement different functions in the core network, for example, may be combined as required to form a network slice. The network elements of the core network may be independent devices, or may be integrated into a same device to implement different functions. Specific forms of the network elements are not limited in this application.

It should further be understood that the names are defined only for ease of distinguishing different functions, and should not constitute any limitation on this application. This application does not exclude a possibility that another name is used in the 5G network and another future network. For example, in a 6G network, some or all of the network elements may continue to use terms in 5G, or may use other names or the like. The names of the interfaces between the network elements in FIG. 1 are merely examples. During specific implementation, the names of the interfaces may be other names. This is not specifically limited in this application. In addition, a name of a message (or signaling) transmitted between the network elements is merely an example, and does not constitute any limitation on a function of the message.

To facilitate understanding of the following embodiments, several terms related to the specification are briefly described.
1. A non-public network (NPN) is a network deployed for a non-public purpose, for example, a network of a vertical vendor. The NPN may also be referred to as a private network.
   The NPN may be deployed in two manners: a standalone NPN (standalone NPN, SNPN) and a non-standalone NPN (non-standalone NPN, NSNPN). It should be understood that the method provided in embodiments of this application should not constitute any limitation on the deployment manner of the NPN.
2. A closed access group (closed access group, CAG) indicates a group of subscription groups that is allowed to access one or more CAG cells associated with the CAG. In other words, one CAG may be used to identify whether the terminal device is allowed to access a network by using a CAG ID associated with one or more CAG cells.
   The CAG ID may indicate the CAG, and is a possible form of identification information of the CAG. For ease of description, the following uses the CAG ID as an example of the identification information of the CAG for description.
3. Default access in embodiments of this application may mean that the terminal device accesses a cell without being restricted by an allowed CAG list configured for the terminal device. For example, if a CAG cell can be accessed in a default access manner, it indicates that regardless of whether the allowed CAG list of the terminal device includes a CAG ID broadcast by an access network device of the cell, the terminal device may request to access the cell.
4. A CAG list that is allowed to be accessed (allowed CAG list) may include identification information, for example, a CAG ID, of all CAGs by which the terminal device is allowed to access the network.

If the terminal device supports the CAG, it may indicate that the terminal device is allowed to access one or more CAG cells. The CAG cell that the terminal device is allowed to access may be determined by using the allowed CAG list. If a CAG ID supported by a CAG cell is included in an allowed CAG list of the terminal device, it indicates that the terminal device accesses the CAG cell, or the terminal device may select the CAG cell to access a network.

In this embodiment of this application, the terminal device may locally maintain one allowed CAG list. A subscription database of the core network may also maintain one allowed CAG list. Usually, CAG IDs included in the two allowed CAG lists are the same.

However, in some cases, the allowed CAG list of the terminal device is not synchronously updated with the allowed CAG list of the subscription data. Consequently, the allowed CAG list of the terminal device may not be a latest allowed CAG list. In a possible case, the user temporarily adds a new CAG to the subscription data for the terminal device, but the allowed CAG list of the terminal device is not updated.

Usually, to update the allowed CAG list, the terminal device first needs to access the network and notify the network that the allowed CAG list of the terminal device needs to be updated. The following describes, with reference to FIG. 2, a schematic flowchart in which the terminal device requests to update (or synchronize) the allowed CAG list.

For ease of understanding, it is assumed that an allowed CAG list locally maintained by the terminal device shown in FIG. 2 includes only one CAG ID. If the terminal device leaves a CAG cell corresponding to the CAG ID, the terminal device cannot access the network by using another CAG cell. The terminal device is set to access the 5GS only by using the CAG cell. In other words, the terminal device is set to a CAG-only (CAG-only) state. In this case, the terminal device needs to update the allowed CAG list.

Step 210: The terminal device sends a registration request message.

It should be understood that a cell served by an access network device may support one or more CAGs, and each CAG corresponds to identification information, for example, a CAG ID, of one CAG. The cell may send a broadcast message to the terminal device in the cell. The broadcast message may include one or more CAG IDs, to indicate one or more CAGs supported by the cell.

The terminal device may select, based on network quality, a to-be-accessed cell, and receive the CAG ID broadcast by the cell. When the allowed CAG list of the terminal device includes a CAG supported by the to-be-accessed cell, the terminal device may access the network by using the CAG.

After accessing the cell, the terminal device may send the registration request message to an AMF by using the access network device. The registration request message may carry indication information, and the indication information may indicate that the allowed CAG list of the terminal device needs to be synchronous with the allowed CAG list of the subscription database.

Step 220: The AMF sends a subscription data request message to a UDM, to request to obtain CAG-related subscription data of the terminal device.

Step 230: The AMF obtains the CAG-related subscription data of the terminal device from the UDM, where the CAG-related subscription data includes the allowed CAG list.

It should be understood that the CAG-related subscription data of the terminal device may include but is limited to the allowed CAG list of the terminal device.

Optionally, before step 220, the AMF may further authenticate the terminal device, and perform step 220 and subsequent steps after authentication succeeds.

Step 240: The AMF sends the allowed CAG list of the terminal device to the terminal device.

The AMF may send, to the terminal device, the allowed CAG list of the terminal device that is obtained from the UDM. It may be understood that the AMF may send the allowed CAG list of the terminal device to the terminal device by using the access network device.

It should be understood that a message used to carry the allowed CAG list may be, for example, a registration accept message, a configuration update command, a configuration update complete message, or the like. This is not limited in this embodiment of this application.

Step 250: The terminal device performs local configuration update.

The terminal device may perform local configuration update based on received subscription information about the CAG. For example, the terminal device may update the locally stored allowed CAG list based on the received allowed CAG list.

It can be learned that the terminal device can obtain the allowed CAG list of the subscription database only after accessing the network. If the CAG ID in the broadcast message received by the terminal device in the currently selected cell does not belong to the locally stored allowed CAG list of the terminal device, the terminal device may fail to access the network, and cannot obtain the allowed CAG list from the subscription data to perform local configuration update.

It should be understood that the foregoing assumptions are made on the terminal device only to facilitate understanding of the process in which the terminal device requests to update the allowed CAG list. Actually, whether the terminal device needs to update the allowed CAG list does not depend on a quantity of CAG IDs that are included in the allowed CAG list locally maintained by the terminal device. For example, when the terminal device determines that none of the CAG IDs broadcast by the access network device in the current area is in the allowed CAG list of the terminal device, the terminal device also needs to update the local allowed CAG list. However, because the terminal device cannot access the network by using the CAG cell, the terminal device cannot obtain the allowed CAG list from the subscription database for local update.

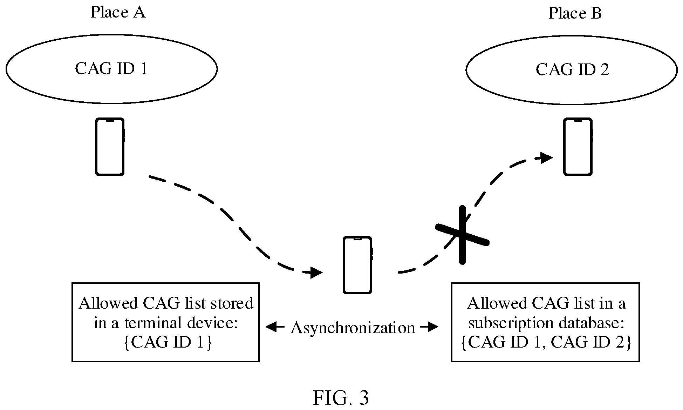

For ease of understanding, FIG. 3 is a diagram of a scenario in which the terminal device cannot access the network because the allowed CAG list of the terminal device is not updated. As shown in FIG. 3, it is assumed that a headquarter of an enterprise is at a place A and a branch of the enterprise is at a place B. The enterprise deploys enterprise private networks (namely, an example of a non-public network) at both the place A and the place B. Identifier information of a CAG broadcast by an access network device of the place A may be a CAG ID 1, and identifier information of a CAG broadcast by an access network device of the place B may be a CAG ID 2. A terminal device of the headquarter of the enterprise is set to access the 5GS only by using the CAG cell. In other words, the terminal device is set to a CAG-only state, or the terminal device only supports a CAG. An allowed CAG list stored in the terminal device includes {CAG ID 1}.

After the terminal device is carried by a user from the place A to the place B, the user may request to configure access permission of the enterprise private network of the place B for the terminal device by using an application (application, APP), by making an IT call, or the like. In this case, an allowed CAG list of the terminal device in subscription data is modified, and a modified allowed CAG list includes {CAG ID 1, CAG ID 2}, but the allowed CAG list stored in the terminal device is not updated. Consequently, the allowed CAG list of the terminal device is not synchronously updated with the allowed CAG list of the subscription data on a network side. On the other hand, the CAG broadcast by the place B includes the CAG ID 2, but does not include the CAG ID 1. Therefore, even if the allowed CAG list of the subscription data is modified, the allowed CAG list stored in the terminal device still does not include the CAG ID 2. Consequently, the terminal device in the place B still cannot access the network of the place B, that is, the terminal device cannot access the enterprise private network of the company. Even if the terminal device is not set to the CAG-only state, although the terminal device can access a cell, the terminal device may still fail to access the CAG cell, and cannot access the enterprise private network of the company.

For the foregoing problems, this application provides a network access method. A first default network access indication is carried in a broadcast message, to indicate that a CAG cell may be accessed in a default access manner. This provides another manner of accessing the CAG cell for a terminal device that supports a CAG. Therefore, an entry for accessing a network is provided for the terminal device that cannot access the network because subscription data of the terminal device is not synchronously updated with subscription data on a network side. After the terminal device accesses the network, a core network device may send an allowed CAG list obtained from a subscription database to the terminal device, to update a local allowed CAG list of the terminal device.

For ease of understanding, before embodiments of this application are described, the following descriptions are first provided.

First, the terms "first", "second", and various sequence numbers in the following embodiments are merely used for differentiation for ease of description, but are not intended to limit the scope of the embodiments of this application. For example, the terms are used to differentiate between different cells, different CAG lists, and the like.

Second, "pre-store" may be implemented by prestoring corresponding code or a corresponding table in a device (for example, including the terminal device and the core network device), or in another manner that may indicate related information. A specific implementation is not limited in this application.

"Store" may be being stored in one or more memories. The one or more memories may be separately disposed, or may be integrated into an encoder, a translator, a processor, or a communication apparatus (for example, a network access apparatus in embodiments of this application). Alternatively, a part of the one or more memories may be separately disposed, and a part of the one or more memories are integrated into a translator, a processor, or a communication apparatus (for example, a network access apparatus in embodiments of this application). A type of the memory may be a storage medium in any form. This is not limited in this application.

Third, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof refers to any combination of these items, including any combination of singular items (pieces) or plural items (pieces). For example, at least one of a, b, and c may represent: a, b, c, a and b, a and c, b and c, or a, b, and c. a, b, and c may be singular or plural.

Fourth, in embodiments of this application, descriptions such as "when", "in a case", and "if" mean that a device (for example, a terminal device, an access network device, or a network element of a core network) performs corresponding processing in an objective situation, are not intended to limit time, do not require that the device (for example, a terminal device, an access network device, or a network element of a core network) has a determining action during implementation, and do not mean any other limitation.

Fifth, default can also be replaced with default. A default access manner is a name defined for ease of distinguishing from a manner of accessing a network by using a CAG, and should not constitute any limitation on this application. For example, the default access manner may also be a manual access manner. Alternatively, the default access manner may be an automatic access manner. This application includes but is not limited to what is described herein.

The following describes the network access method in embodiments of this application in detail with reference to the accompanying drawings.

For ease of understanding and description, the following describes in detail the method in embodiments of this application by using an example in which the terminal device interacts with the access network device, and the terminal device and the access network device interact with the core network device. However, this should not be construed as any limitation on an execution entity of the method provided in this application. Any execution entity may be used as the execution entity of the method in embodiments of this application, provided that a program that records code of the method in embodiments of this application can be run, to implement the method in embodiments of this application. For example, the terminal device, the access network device, and the core network device shown in the following embodiments may alternatively be respectively replaced with components, for example, a chip, a chip system, or another functional module that can invoke and execute a program, in the terminal device, the access network device, and the core network device.

In addition, the core network device may include but is not limited to the AMF and the UDM in the network architecture shown in FIG. 1.

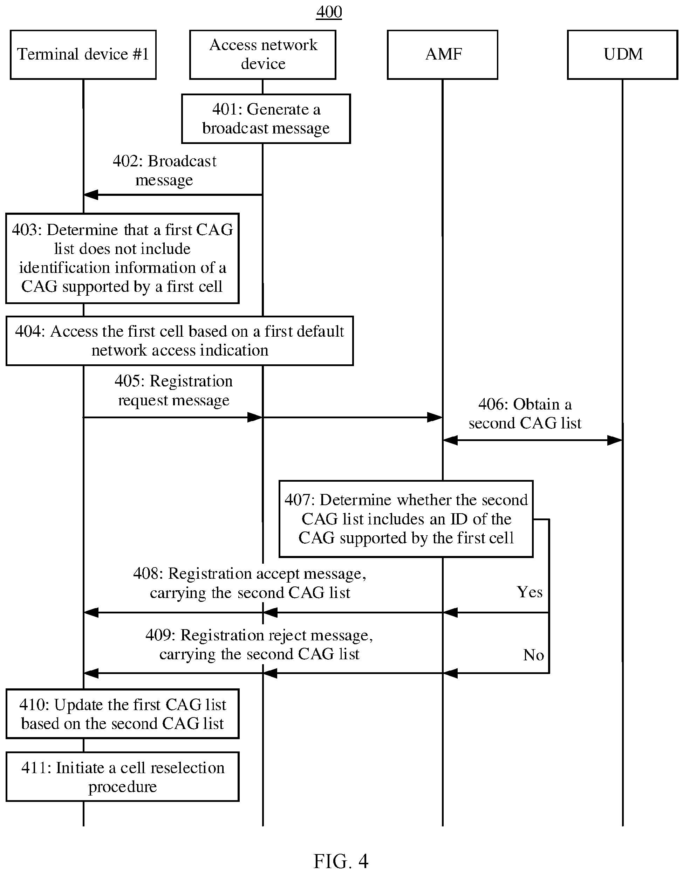

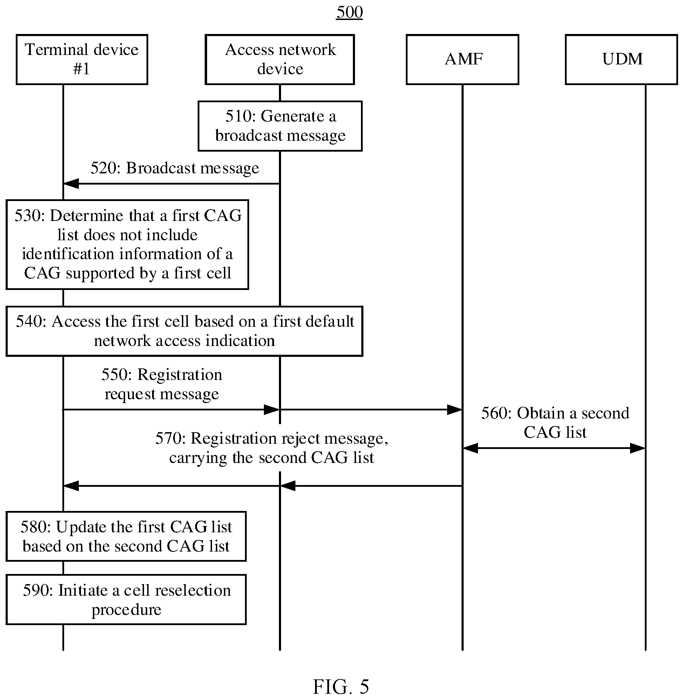

In addition, for ease of understanding and description, it is assumed that CAGs supported by the first cell include CAGs whose IDs are a CAG ID 1 and a CAG ID 2. The identification information of the CAG that can access the first cell in the default access manner is denoted as a CAG ID 100, and the CAG ID 100 may be understood as a dedicated CAG ID for default network access. An allowed CAG list (which is denoted as a first CAG list below) locally stored in a terminal device #1 includes {CAG ID 3}. An allowed CAG list (which is denoted as a second CAG list below) of the terminal device #1 in the subscription database includes {CAG ID 2, CAG ID 3}. The terminal device #1 is a terminal device that supports a CAG. The embodiments described below with reference to FIG. 4 and FIG. 5 may be described based on the foregoing assumptions.

FIG. 4 is a schematic flowchart of a network access method according to an embodiment of this application from a perspective of device interaction. The following describes steps in a method 400 in detail.

Step 401: An access network device generates a broadcast message, where the broadcast message includes identification information of one or more CAGs supported by a first cell and a first default network access indication.

The first cell is a cell served by the access network device. The first cell may support one or more CAGs. In other words, when an allowed CAG list of a terminal device includes a CAG supported by the first cell, the terminal device may access a network by using the CAG.

Each CAG may correspond to identification information of one CAG, for example, a CAG ID. Therefore, the broadcast message may include one or more CAG IDs. For example, the CAGs supported by the first cell may include CAGs whose identification information is a CAG ID 1 and a CAG ID 2. Therefore, the broadcast message may include {CAG ID 1, CAG ID 2}.

The first default network access indication may indicate that the first cell is accessed in a default access manner. In a possible design, the first default network access indication may include an entry that may be used to access the first cell in the default access manner, and the terminal device may access the first cell through the entry.

In this embodiment of this application, the default access manner of the first cell may include an automatic selection access manner or a manual selection access manner. The terminal device may automatically select, based on the entry for accessing the first cell that is provided by the access network device, the entry to access the first cell. Alternatively, the terminal device may prompt, based on an entry indication for accessing the first cell that is provided by the access network device, a user to access the first cell through the entry, and may access the first cell in response to an operation in which the user selects the entry.

It can be learned that, in the automatic selection access manner, the user may be unaware of a specific process in which the terminal device accesses the first cell. However, in the manual selection access manner, the user may select and determine an entry for accessing the first cell by the terminal device, which has stronger interaction.

It should be understood that whether the terminal device accesses the first cell in the automatic selection access manner or the manual selection access manner may be indicated by the access network device. For example, the first default network access indication additionally carries an indication of automatic selection or an indication of manual selection. Alternatively, the terminal device may determine whether to access the first cell in the automatic selection access manner or the manual selection access manner. For example, the terminal device may determine, based on setting of an automatic selection mode or a manual selection mode that is set by the user for the terminal device, to use the automatic selection access manner or the manual selection access manner. Alternatively, the terminal device accesses the first cell in a pre-configured manner. For example, the pre-configured manner may be defined in a protocol. For example, the protocol defines a case in which the terminal device accesses the first cell in the automatic selection access manner or the manual selection access manner.

In addition, an entry indication for accessing the first cell in the automatic selection access manner may be the same as or different from an entry indication for accessing the first cell in the manual selection access manner. This is not limited in this application.

In a possible design, the first default network access indication includes identification information of a dedicated CAG for accessing the first cell in a default access manner. The identification information of the dedicated CAG for accessing the first cell in the default access manner may be referred to as identification information of a dedicated CAG for default network access, or identification information of a dedicated CAG. It may be understood that the identification information of the dedicated CAG for default network access is the entry for accessing the first cell in the default access manner. The dedicated CAG for default network access may alternatively be one of the CAGs supported by the first cell.

A possible form of the identifier information of the dedicated CAG for default network access is an identifier of the CAG, for example, a CAG ID 100. In other words, the broadcast message may include {CAG ID 1, CAG ID 2, CAG ID 100}.

Another possible form of the identification information of the dedicated CAG for default network access is a human-readable network name (human-readable network name, HRNN), for example, a network name that can be read by the user such as an "office network (temporary entry) of XX enterprise". In other words, the broadcast message may include {CAG ID 1, CAG ID 2, office network (temporary entry) of XX enterprise}.

Optionally, the first default network access indication further includes indication information of default network access, for example, indication information such as "default" and "default", to indicate that the identification information of the dedicated CAG or the HRNN is used by the terminal device to access the first cell in the default access manner.

Further, the first default network access indication may further include an indication of automatic selection or an indication of manual selection. For example, an identifier that can be used to distinguish between automatic selection and manual selection is carried, for example, "automatic selection", "auto selection", "automatic", "auto", "manual selection", "manual selection", "manual", and "manual". Alternatively, an indication bit "1" or "0" is carried, to distinguish between automatic selection and manual selection. For example, "1" indicates automatic selection, and "0" indicates manual selection.

It should be understood that the foregoing listed specific information carried in the first default network access indication is merely an example, and should not constitute any limitation on this application.

It may be understood that the identification information of the dedicated CAG (which may also be referred to as a CAG dedicated for default network access) for default network access that is included in the first default network access indication may also be referred to as identification information of a CAG (which may also be referred to as a dedicated CAG for automatic network access) dedicated for automatic selection, or identification information of a CAG (which may also be referred to as a dedicated CAG for manual network access) dedicated for manual selection.

It should be understood that the broadcast message may further include other information, for example, system information. Specific information included in the broadcast message is not limited in this embodiment of this application.

Step 402: The access network device sends the broadcast message in the first cell. Correspondingly, each terminal device in the first cell receives the broadcast message.

All terminal devices in the first cell may receive the broadcast message. It should be understood that the figure is merely an example, and shows an example in which the terminal device #1 receives the broadcast message. However, this should not constitute any limitation on this application. The terminal device #1 may be any terminal device in the first cell.

Step 403: The terminal device #1 determines that a first CAG list does not include the identification information of the CAG supported by the first cell.

After receiving the broadcast message, the terminal device #1 may determine whether the first CAG list includes the identification information, in the broadcast message, of the CAG supported by the first cell. It should be understood that the terminal device #1 determines whether the first CAG list includes the identification information of the CAG supported by the first cell. In essence, the terminal device #1 determines whether a CAG that allows the terminal device #1 to access the network is included in the CAGs supported by the first cell. The terminal device may determine an intersection between identification information of CAGs in the first CAG list and the identification information of the CAG in the broadcast message, to determine whether the CAG that allows the terminal device #1 to access the network is included in the CAGs supported by the first cell.

It should be noted that the identification information of the CAGs in the first CAG list is identification information of all CAGs that are locally maintained by the terminal device #1 and that allow the terminal device #1 to access the network. The identification information of the CAGs in the first CAG list may be a CAG ID, or may be other information that can be used to identify the CAG. The identification information of the CAG supported by the first cell in the broadcast message may be a CAG ID, or may be other information that can be used to identify the CAG. This is not limited in this embodiment of this application. When the first CAG list and the broadcast message identify CAGs by using different identification information, the terminal device #1 may obtain a correspondence between a CAG and identification information of the CAG in advance, to determine CAGs corresponding to different identification information.

It may be understood that, because the identification information of the dedicated CAG for default network access is carried only in the broadcast message, and is not in the allowed CAG list of the terminal device, the intersection between the identification information of the CAGs in the first CAG list of the terminal device #1 and the identification information of the CAG in the broadcast message is the same as an intersection between the identification information of the CAGs in the first CAG list of the terminal device #1 and the identification information of the CAG supported by the first cell, where both the two intersections do not include the dedicated CAG for default network access. Therefore, that the terminal device #1 determines whether the first CAG list includes the identification information of the CAG supported by the first cell may alternatively be replaced with that the terminal device #1 determines whether the first CAG list includes the identification information of the CAG in the broadcast message.

In terminal devices camping on the first cell, an allowed CAG list locally stored in a terminal device may include {CAG ID 1, CAG ID 3, CAG ID 4}, and the identification information of the broadcast message in the first cell includes {CAG ID 1, CAG ID 2, a CAG ID 100}, and an intersection of the allowed CAG list and the identification information is the CAG ID 1, so that the terminal device may select the first cell to access the network.

However, in some cases, intersections between allowed CAG lists (which is denoted as a first CAG list for ease of differentiation and description) locally stored in some terminal devices (for example, the terminal device #1) and the identification information of the CAG in the broadcast message are empty sets. For example, a CAG ID in the first CAG list is not in the CAG IDs in the broadcast message, or the first CAG list does not include any one of IDs of the one or more CAGs supported by the first cell. Therefore, the terminal device #1 cannot access the network by using the CAG.

For example, the first CAG list includes {CAG ID 3}. An intersection set between the first CAG list and {CAG ID 1, CAG ID 2, CAG ID 100} in the broadcast message is empty.

In this embodiment of this application, because the broadcast message includes the first default network access indication, the terminal device #1 may provide, based on the first default network access indication, an entry for accessing the first cell for the user, and may further initiate a registration procedure in the first cell to access the network.

Step 404: The terminal device #1 accesses the first cell based on the first default network access indication.

As described above, the terminal device #1 may access the first cell in the automatic selection access manner or the manual selection access manner. The access manner may be configured by the access network device, or may be determined by the terminal device, or may be predefined in the protocol.

If the terminal device #1 determines to access the first cell in the automatic selection access manner, after performing step 403, the terminal device #1 may access the first cell through the entry, for example, the identifier information of the dedicated CAG for default network access, indicated by the first default network access indication.

If the terminal device #1 determines to access the first cell in the manual selection access manner, after performing step 403, the terminal device #1 may display, based on the entry, for example, the identifier information of the dedicated CAG for default network access, indicated by the first default network access indication through a user interface (user interface, UI), identification information of a network that can be selected.

A possible form of the identification information of the network that can be selected is the identifier information of the dedicated CAG for default network access, for example, the CAG ID 100. The terminal device #1 may display, based on the default network access indication, the CAG ID 100 instead of an ID, for example, the CAG ID 1 and the CAG ID 2 that are supported by the first cell, of another CAG on a manual selection interface.

Another possible form of the identification information of the network that can be selected is an HRNN associated with the identification information of the dedicated CAG.

As described above, the access network device may broadcast the HRNN in the broadcast message, and the terminal device #1 may present the HRNN in the broadcast message to the user based on the HRNN in the broadcast message through the user interface. Alternatively, the HRNN may be prestored in the terminal device (for example, the terminal device #1), and the terminal device may display the prestored HRNN on the user interface based on the received first default network access indication.

It should be understood that the ID of the dedicated CAG for default network access and the HRNN are merely two possible forms of the identification information of the network that can be selected. This application includes but is not limited thereto. The identification information of the network that can be selected may alternatively be displayed on the user interface in another form that can be read or understood by the user.

The user selects, based on the identification information, displayed by the terminal device #1 through the user interface, of the network that can be selected, the identification information by using an operation such as tapping, to trigger the terminal device #1 to access the first cell.

It should be understood that when the user selects the identification information, it indicates that the user expects to access the first cell in the manual selection access manner.

Step 405: The terminal device #1 sends a registration request (registration request) message to an AMF. Correspondingly, the AMF receives the registration request message from the terminal device #1.

After accessing the first cell, the terminal device #1 may send the registration request message to the AMF by using the access network device, to initiate a registration procedure.

The registration request message may be the same as a registration request message in the conventional technology, or may further carry a second default network access indication based on the registration request message in the conventional technology. The second default network access indication indicates that the terminal device #1 accesses the first cell in the default access manner.

Similar to the first default network access indication, a possible form of the second default access indication is the identification information of the dedicated CAG for default network access, for example, the CAG ID 100. Another possible form of the second default access indication is the HRNN associated with the identification information of the dedicated CAG for default network access. The identifier information of the dedicated CAG for default network access and the HRNN associated with the identification information of the dedicated CAG for default network access are described in detail above. For brevity, details are not described herein again.

The second default network access indication may be, for example, a predefined indication bit in the registration request message. For example, the indication bit " 1" indicates that the access manner is the default access manner, and the indication bit "0" indicates that the access manner is not the default access manner. For another example, the second default network access indication may be the examples of the first default network access indication, for example, an identifier such as "default", "default", "automatic selection", "auto selection", "automatic", "auto", "manual selection", "manual selection", "manual", or "manual". For brevity, examples are not enumerated herein again. It should be understood that the first default network access indication is carried in the broadcast message of the access network device, and the second default network access indication is carried in the registration request message sent by the terminal device #1. Although functions of the first default network access indication and the second default network access indication are similar, the first default network access indication and the second default network access indication come from different devices.

Step 406: The AMF obtains a second CAG list from a subscription database based on the registration request message.

It should be understood that the second CAG list is an allowed CAG list of the terminal device #1 in the subscription database. The subscription database may be, for example, a subscription database in a UDM.

In a possible implementation, after receiving the registration request message from the terminal device, the AMF may perform a corresponding operation based on a registration procedure in the conventional technology. In addition, the AMF may further obtain the allowed CAG list, for example, the second CAG list, of the terminal device #1 from the subscription database based on the identification information, for example, a subscription concealed identifier (subscription concealed identifier, SUCI), and a globally unique temporary UE identity (globally unique temporary UE identity, GUTI), of the terminal device #1 that is carried in the registration request message. For example, the second CAG list includes {CAG ID 2, CAG ID 3}.

It should be understood that, for the registration procedure initiated by the terminal device, refer to the conventional technology, for example, related descriptions of a registration procedure in the technical specification (technical specification, TS) 23.502. For brevity, details are not described herein.

Step 407: The AMF determines whether the second CAG list includes the ID of the CAG supported by the first cell.

For example, the AMF may obtain an intersection between the second CAG list obtained from the subscription database and the ID (for example, the CAG ID 1 and the CAG ID 2) of the CAG supported by the first cell, to determine whether the second CAG list includes the ID of the CAG supported by the first cell. If the intersection is not empty, it indicates that the second CAG list includes the ID of the CAG supported by the first cell, and step 408 and step 410 are performed. If the intersection is empty, it indicates that the second CAG list does not include the ID of the CAG supported by the first cell, and step 409 to step 411 are performed.

It is assumed that the second CAG list is {CAG ID 2, CAG ID 3}, and an intersection between the second CAG list and {CAG ID 1, CAG ID 2} is the CAG ID 2, that is, the intersection is not empty. In other words, it indicates that the allowed CAG list of the terminal device #1 includes the ID of the CAG supported by the first cell.

Step 408: The AMF sends a registration accept (registration accept) message to the terminal device #1, where the registration accept message carries the second CAG list.

The AMF may accept the registration request of the terminal device #1 when the second CAG list of the terminal device #1 includes the ID of the CAG of the first cell. Therefore, the terminal device #1 may access the network without re-accessing the network based on the second CAG list.

Step 409: The AMF sends a registration reject (registration reject) message to the terminal device #1, where the registration reject message carries the second CAG list.

The AMF may reject the registration request of the terminal device #1 when the second CAG list of the terminal device #1 does not include the ID of the CAG of the first cell.

Step 410: The terminal device #1 updates the first CAG list based on the second CAG list.

It may be learned that regardless of whether the registration request message of the terminal device #1 is accepted, the terminal device #1 may receive the second CAG list from the AMF. The terminal device #1 may perform local configuration update based on the second CAG list. Specifically, that the terminal device #1 performs local configuration update may include: The terminal device #1 updates the local first CAG list based on the second CAG list. For example, the terminal device #1 may replace the locally stored first CAG list with the second CAG list, or replace the first CAG list with the second CAG list. After update is performed, the allowed CAG list locally stored in the terminal device #1 is replaced with the second CAG list, that is, consistent with the allowed CAG list in the subscription database.

In another aspect, when the registration request message of the terminal device #1 is rejected, optionally, the terminal device #1 may further perform step 411 to initiate a cell reselection procedure, to re-access the network.

For example, the terminal device #1 may initiate the cell reselection procedure based on the second CAG list. For example, the terminal device #1 may select a cell, for example, denoted as a second cell, based on cell signal quality. The terminal device #1 may further receive a broadcast message in the second cell, to obtain one or more CAG IDs in the broadcast message. It should be understood that the one or more CAG IDs in the broadcast message are IDs of one or more CAGs supported by the second cell.

The terminal device #1 may obtain an intersection between the one or more CAG IDs in the broadcast message of the second cell and the second allowed CAG list, to determine whether the second CAG list includes the ID of the CAG supported by the second cell. If the intersection is not empty, it indicates that the second CAG list includes the ID of the CAG supported by the second cell, and the terminal device #1 may access a network of the second cell by using the CAG ID. If the intersection is empty, it indicates that the second CAG list does not include the ID of the CAG supported by the second cell, and the terminal device may continue the cell reselection procedure.

According to the foregoing solutions, the access network device broadcasts the first default network access indication, to provide an entry for a terminal device to access the first cell. When the terminal device is set to a CAG-only state, but cannot access the network by using a CAG ID, the terminal device may access the first cell in the default access manner, and further access a network, to obtain an allowed CAG list in a subscription database, so as to complete local configuration update. This can prevent a case in which the terminal device cannot access the network caused by asynchronization between the allowed CAG list of the terminal device and the allowed CAG list in the subscription database, enable the terminal device to update a local allowed CAG list in time, and prevent poor user experience caused by failure in network access.

In addition, the default access manner of the first cell is provided for the terminal device, so that the terminal device does not need to attempt to access the network by using a non-CAG cell. This can prevent a non-public network from being accessed by an unauthorized user by using the non-CAG cell, and improve security of the non-public network.

In the network access method shown in FIG. 4, the core network device determines, based on the allowed CAG list, obtained from the subscription database, of the terminal device #1, whether the terminal device #1 belongs to the CAG supported by the first cell, to determine whether to accept the registration request message of the terminal device #1. The core network device may accept the registration request of the terminal device #1 when determining that the terminal device #1 belongs to the CAG supported by the first cell. Therefore, the terminal device #1 does not need to access the network again by using the CAG ID.

It should be understood that the procedure shown in FIG. 4 is not the only implementation in which the terminal device #1 accesses the network. In another implementation, the core network device may also directly skip a security authentication procedure in the registration procedure, and send the allowed CAG list, obtained from the subscription database, of the terminal device #1 to the terminal device #1. The following describes a network access method according to another embodiment of this application in detail with reference to FIG. 5.

FIG. 5 is a schematic flowchart of the network access method according to another embodiment of this application from a perspective of device interaction. The following describes steps in a method 500 in detail.

Step 510: An access network device generates a broadcast message, where the broadcast message includes identification information of one or more CAGs supported by a first cell and a first default network access indication.

Step 520: The access network device sends the broadcast message in the first cell. Correspondingly, each terminal device in the first cell receives the broadcast message.

Step 530: The terminal device #1 determines that a first CAG list does not include the identification information of the CAG supported by the first cell.

Step 540: The terminal device #1 accesses the first cell based on the first default network access indication.

The terminal device #1 may be any terminal device in the first cell.

It should be understood that a process from step 510 to step 540 is the same as a process from step 401 to step 404 in the method 400 described above with reference to FIG. 4. For details, refer to related descriptions in the method 400. For brevity, details are not described herein again.

Step 550: The terminal device #1 sends a registration request message to an AMF. Correspondingly, the AMF receives the registration request message from the terminal device #1.

In this embodiment, the registration request message carries a second default network access indication. The second default network access indication may indicate that the terminal device #1 accesses the first cell in a default access manner. Because the second default network access indication may be an indication added in the existing registration request message, the second default network access indication may distinguish the terminal device #1 from another terminal device that can normally access a network by using a CAG.

Step 560: The AMF obtains a second CAG list from a subscription database based on the registration request message.

In this embodiment, the AMF may obtain the second CAG list from the subscription database based on the second default network access indication in the registration request message. For example, the AMF may identify, based on the second default network access indication, that the terminal device #1 needs to obtain a subscribed CAG list. Optionally, the AMF may omit a security authentication procedure between the AMF and the terminal device #1.

Step 570: The AMF sends the second CAG list to the terminal device #1.

The AMF may send, to the terminal device #1, the second CAG list obtained from the subscription database, so that the terminal device #1 can perform local configuration update.

In another aspect, because the AMF skips a registration procedure of the terminal device #1, the AMF may directly send a registration reject message to the terminal device #1. Therefore, in a possible design, the second CAG list may be carried in the registration reject message. In other words, a possible implementation of step 560 is that the AMF sends the registration reject message to the terminal device #1, where the registration reject message carries the second CAG list.

Step 580: The terminal device #1 updates the first CAG list based on the second CAG list.

It should be understood that a process of step 580 is the same as a process of step 410 in the method 400 described above with reference to FIG. 4. For details, refer to related descriptions in the method 400. For brevity, details are not described herein again.

Then, the terminal device #1 may further access a network based on the updated allowed CAG list. For example, the terminal device #1 may obtain an intersection between the second CAG list and the identification information of the CAG in the broadcast message sent by the access network device, and may access the network based on a CAG in the intersection. A method for accessing the network by the terminal device #1 by using the CAG is the same as that in the conventional technology. For brevity, details are not described herein.

It is clear that the intersection between the second CAG list and the identification information of the CAG in the broadcast message sent by the access network device may also be an empty set. In this case, optionally, the terminal device #1 may further perform step 590 to initiate a cell reselection procedure, to re-access the network.

It should be understood that a process of step 590 is the same as a process of step 411 in the method 400 described above with reference to FIG. 4. For details, refer to related descriptions in the method 400. For brevity, details are not described herein again.

According to the foregoing solutions, the access network device broadcasts the first default network access indication, to provide an entry for a terminal device to access a first network. When the terminal device is set to a CAG-only state, but cannot access the network by using a CAG ID, the terminal device may access the first cell in the first default access manner, and further access a network, to obtain an allowed CAG list in a subscription database, so as to complete local configuration update. This can prevent a case in which the terminal device cannot access the network caused by asynchronization between the allowed CAG list of the terminal device and the allowed CAG list in the subscription database, enable the terminal device to update a local allowed CAG list in time, and prevent poor user experience caused by failure in network access.

In addition, the core network device may directly skip the security authentication procedure in the normal registration procedure based on the second default network access indication sent by the terminal device, and send, to the terminal device, the allowed CAG list, obtained from the subscription database, of the terminal device. Therefore, subscription data can be obtained for the terminal device in shorter time, so that the terminal device performs local configuration update in time.

In addition, the default access manner of the first cell is provided for the terminal device, so that the terminal device does not need to attempt to access the network by using a non-CAG cell. This can prevent a non-public network from being accessed by an unauthorized user by using the non-CAG cell, and improve security of the non-public network.

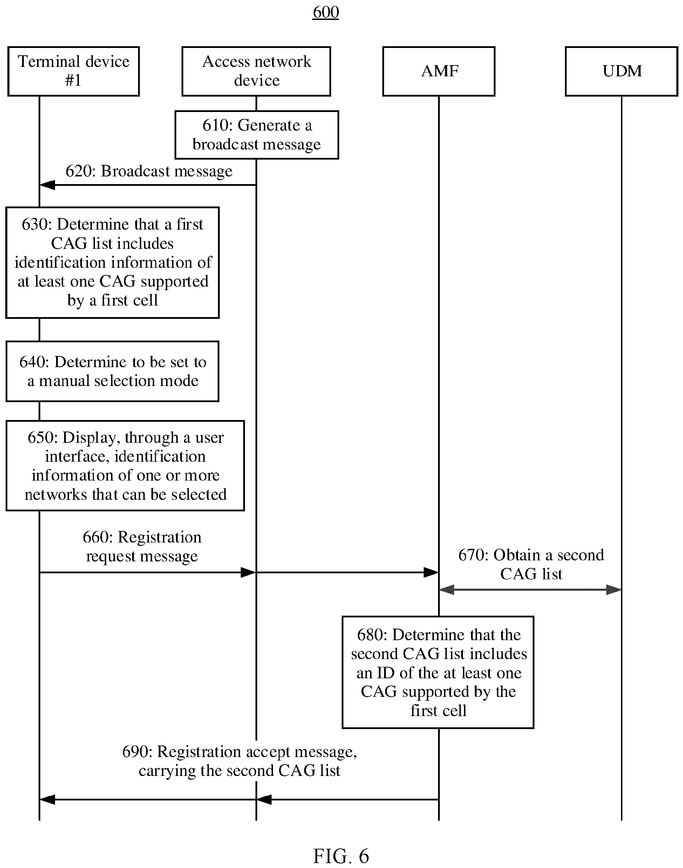

In the embodiments shown in FIG. 4 and FIG. 5, it is assumed that the intersection between the first CAG list locally stored in the terminal device #1 and the one or more CAG IDs broadcast in the first cell is empty. Based on this assumption, the network access method in embodiments of this application is described above. Actually, the method may also be used when the intersection between the first CAG list locally stored in the terminal device #1 and the one or more CAG IDs broadcast in the first cell is not empty. The following describes a network access method according to still another embodiment of this application in detail with reference to FIG. 6.

For ease of understanding and description, it is assumed that CAGs supported by a first cell include CAGs whose IDs are a CAG ID 1 and a CAG ID 2. An allowed CAG list (namely, a first CAG list) locally stored in the terminal device #1 includes {CAG ID 2, CAG ID 3}. The terminal device #1 is a terminal device that supports a CAG and is set to a manual selection mode.

FIG. 6 is a schematic flowchart of the network access method according to still another embodiment of this application from a perspective of device interaction. The following describes steps in a method 600 in detail.

Step 610: An access network device generates a broadcast message, where the broadcast message includes identification information of one or more CAGs supported by a first cell and a first manual selection indication.

Step 620: The access network device sends the broadcast message in the first cell. Correspondingly, each terminal device in the first cell receives the broadcast message.

Step 630: The terminal device #1 determines that a first CAG list includes identification information of at least one CAG supported by the first cell.

After receiving the broadcast message, the terminal device #1 may determine whether the first CAG list includes the identification information, in the broadcast message, of the CAG supported by the first cell. As described above, the terminal device #1 determines whether the first CAG list includes the identification information of the CAG supported by the first cell. In essence, the terminal device #1 determines whether a CAG that allows the terminal device #1 to access the network is included in the CAGs supported by the first cell.

The terminal device #1 may obtain an intersection between the first CAG list and the identification information of the one or more CAGs in the broadcast message, to determine whether the first CAG list includes the identification information of the CAG supported by the first cell. If the intersection is not empty, it indicates that the first CAG list includes the identification information of the CAG supported by the first cell. If the intersection is empty, it indicates that the first CAG list does not include identification information of any CAG supported by the first cell.

In this embodiment, the first CAG list includes {CAG ID 2, CAG ID 3}, the identification information of the CAG supported by the first cell includes {CAG ID 1, CAG ID 2}, and an intersection between the first CAG list and {CAG ID 1, CAG ID 2} is the CAG ID 2, that is, the intersection is not empty. Therefore, the terminal device #1 may determine that the first CAG list includes the identification information of the CAG supported by the first cell.

Step 640: The terminal device #1 determines to be set to a manual selection mode.

A user may further set the manual selection mode or an automatic selection mode for the terminal device. The manual selection mode may specifically mean that the user performs a manual operation to indicate a network to be selected for access. The automatic selection mode may specifically mean that the terminal device automatically selects a network for access.

In some possible designs, when the user sets the manual selection mode, a switch of the manual selection mode in the terminal device is in an on state. In other words, when the terminal device detects that the switch of the manual selection mode is in an on state, the terminal device may determine that the terminal device is set to the manual selection mode. When the switch of the manual selection mode in the terminal device is in an off state, the terminal device may determine that the terminal device is set to the automatic selection mode.

In some other possible designs, when the user sets the manual selection mode, a switch of the automatic selection mode in the terminal device is in an off state. In other words, when the terminal device detects that the switch of the automatic selection mode is in an off state, the terminal device may determine that the terminal device is set to the manual selection mode. When the terminal device detects that the switch of the automatic selection mode is in the on state, the terminal device may determine that the terminal device is set to the automatic selection mode.

In this embodiment, it is assumed that the terminal device #1 is set to the manual selection mode.

Step 650: The terminal device #1 displays, through a user interface, identification information of one or more networks that can be selected.

When it is determined that the first CAG list includes an ID of the CAG supported by the first cell, and the terminal device #1 is set to the manual selection mode, the terminal device #1 may display, through the user interface, the identification information of the network that can be selected.

In this embodiment, the identification information of the network that can be selected may include the CAG ID 2, but does not include the CAG ID 100. In other words, when the intersection between the first CAG list and the identification information of the one or more CAGs in the broadcast message is not empty, the terminal device #1 may display the identification information of the CAG in the intersection through the user interface. When the intersection between the first CAG list and the identification information of the one or more CAGs in the broadcast message is empty, the terminal device #1 may display, through the user interface, an entry, for example, the dedicated CAG ID for default access, that may access the first cell in the default access manner. Therefore, regardless of whether the first CAG list includes the identification information of the CAG supported by the first cell, the terminal device #1 may display, to the user through the user interface, a network that can be selected, to access the network. In addition, in different cases, networks that can be selected and that are displayed by the terminal device #1 to the user are also different, to avoid interference to the user.

Step 660: The terminal device #1 sends a registration request message to an AMF in response to the user operation. Correspondingly, the AMF receives the registration request message from the terminal device.

The terminal device #1 may send the registration request message to the AMF in response to a selection operation that is used to select identification information, displayed through the user interface, of a network that can be selected.

Step 670: The AMF obtains a second CAG list from a subscription database based on the registration request message.

Step 680: The AMF determines whether the second CAG list includes the ID of the CAG supported by the first cell.

It should be understood that, for a specific process from step 660 to step 680, refer to related descriptions of step 404 to step 407 in the method 400. For brevity, details are not described herein again.

Step 690: The AMF sends a registration accept message to the terminal device #1.

The AMF may directly send the registration accept message to the terminal device #1, to complete a registration procedure of the terminal device #1.

Optionally, the registration accept message carries the second CAG list.

Although the first CAG list locally stored in the terminal device #1 includes the ID of the CAG supported by the first cell, it does not mean that the first CAG list locally stored in the terminal device #1 is consistent with the second CAG list in the subscription database. Therefore, the AMF may add, to the registration accept message, the second CAG list obtained from the subscription database, and send the registration accept message to the terminal device #1. Then, the terminal device #1 may update the first CAG list based on the second CAG list.

It should be understood that, for step 690 and a subsequent procedure, refer to related descriptions of step 408 and step 410 in the method 400. For brevity, details are not described herein again.

It should further be understood that, when the terminal device #1 is set to the automatic selection mode, the terminal device #1 may access the network based on the CAG ID 2 and the procedure in the conventional technology, and does not need to access the network in the manual selection manner. For brevity, detailed descriptions of the procedure are omitted herein.

Based on the foregoing solutions, the terminal device may access the network by using the CAG ID in the manual selection mode. Therefore, when a cell on which the terminal device camps changes due to a business trip or the like, the user may directly set the terminal device to the manual selection mode, and the user may access, in the manual selection mode, a CAG cell by using the CAG ID that is allowed to be accessed or the dedicated CAG ID for default access that is provided by the access network device, to access a network. This can prevent a case in which the terminal device cannot access the network caused by asynchronization between the allowed CAG list of the terminal device and the allowed CAG list in the subscription database, enable the terminal device to update a local allowed CAG list in time, and prevent poor user experience caused by failure in network access.

The foregoing describes in detail a plurality of embodiments with reference to a plurality of flowcharts. However, it should be understood that related descriptions of the flowcharts and corresponding embodiments of the flowcharts are merely examples for ease of understanding, and should not constitute any limitation on this application. Each step in each flowchart does not necessarily need to be performed. For example, some steps may be skipped. In addition, an execution sequence of each step is not fixed, and is not limited to that shown in the figure. The execution sequence of each step is determined based on a function and internal logic of the step.

The foregoing embodiments of this application describe the method in embodiments of this application from a perspective of interaction between the terminal device, the access network device, and the core network device. To implement functions in the method in embodiments of this application, the terminal device, the access network device, and the core network device may include a hardware structure and/or a software module, and implement the functions in a form of the hardware structure, the software module, or a combination of the hardware structure and the software module. Whether a function in the foregoing functions is performed in a form of the hardware structure, the software module, or both the hardware structure and the software module depends on a specific application and a design constraint condition of the technical solutions.

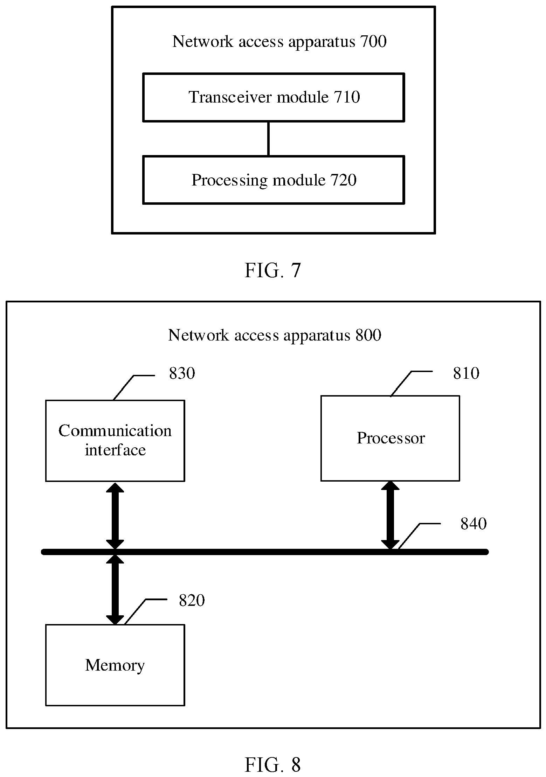

The following describes in detail a network access apparatus in embodiments of this application with reference to FIG. 7 to FIG. 10.

FIG. 7 is a schematic block diagram of a network access apparatus 700 according to an embodiment of this application. It should be understood that the apparatus 700 may correspond to the terminal device, the access network device, and/or the core network device in the method embodiments, and may be configured to perform steps and/or procedures performed by the terminal device, the access network device, or the core network device in the method embodiments.

As shown in FIG. 7, the apparatus 700 may include a transceiver module 710 and a processing module 720.

Optionally, the apparatus 700 may correspond to the terminal device #1 in the embodiments shown in FIG. 4 to FIG. 6, and may include modules of the method performed by the terminal device #1.

Specifically, when the apparatus 700 is configured to perform the method performed by the terminal device #1 in FIG. 4, the transceiver module 710 may be configured to perform step 402, step 405, and step 408, or step 409 in the method 400. The processing module 720 may be configured to perform some or all of step 403, step 404, step 410, and step 411 in the method 400.

When the apparatus 700 is configured to perform the method performed by the terminal device #1 in FIG. 5, the transceiver module 710 may be configured to perform step 520, step 550, and step 570 in the method 500. The processing module 720 may be configured to perform some or all of step 530, step 540, step 580, and step 590 in the method 500.

When the apparatus 700 is configured to perform the method performed by the terminal device #1 in FIG. 6, the transceiver module 710 may be configured to perform step 620, step 660, and step 690 in the method 600. The processing module 720 may be configured to perform step 630 to step 650 in the method 600.

Optionally, the apparatus 700 may correspond to the access network device in the embodiments shown in FIG. 4 to FIG. 6, and may include modules of the method performed by the access network device.

Specifically, when the apparatus 700 is configured to perform the method performed by the access network device in FIG. 4, the transceiver module 710 may be configured to perform step 402 in the method 400, and perform forwarding steps in step 405, step 408, and step 409. The processing module 720 may be configured to perform step 401 in the method 400.

When the apparatus 700 is configured to perform the method performed by the access network device in FIG. 5, the transceiver module 710 may be configured to perform step 520 in the method 500, and perform transceiver steps in step 550 and step 570. The processing module 720 may be configured to perform step 510 in the method 500.

When the apparatus 700 is configured to perform the method performed by the access network device in FIG. 6, the transceiver module 710 may be configured to perform step 620 in the method 600, and perform transceiver steps in step 660 and step 690. The processing module 720 may be configured to perform step 610 in the method 600.

Optionally, the apparatus 700 may correspond to the AMF in the embodiments shown in FIG. 4 to FIG. 6, and may include modules of the method performed by the AMF.

Specifically, when the apparatus 700 is configured to perform the method performed by the AMF in FIG. 4, the transceiver module 710 may be configured to perform step 405, step 406, and step 408, or step 409 in the method 400. The processing module 720 may be configured to perform step 407 in the method 400.

When the apparatus 700 is configured to perform the method performed by the AMF in FIG. 5, the transceiver module 710 may be configured to perform step 550 to step 570 in the method 500.

When the apparatus 700 is configured to perform the method performed by the AMF in FIG. 6, the transceiver module 710 may be configured to perform step 660, step 670, and step 690 in the method 600. The processing module 720 may be configured to perform step 680 in the method 600.

It should be understood that, in embodiments of this application, division into the modules is an example, and is merely logical function division. During actual implementation, another division manner may be used. In addition, functional modules in embodiments of this application may be integrated into one processor, each functional module may exist alone physically, or two or more modules may be integrated into module. The integrated module may be implemented in a form of hardware, or may be implemented in a form of a software functional module.

FIG. 8 is another schematic block diagram of a network access apparatus according to an embodiment of this application. As shown in FIG. 8, an apparatus 800 includes at least one processor 810, configured to implement functions of the terminal device #1, the access network device, and/or the core network device in the method in embodiments of this application.

For example, if the apparatus 800 corresponds to the terminal device #1 in the method embodiments, the processor 810 may be configured to: determine whether a first CAG list includes identification information of a CAG supported by a first cell, and update the first CAG list. If the apparatus 800 corresponds to the access network device in the method embodiments, the processor 810 may be configured to generate a broadcast message. If the apparatus 800 corresponds to the AMF in the method embodiments, the processor 810 may be configured to determine whether a second CAG list includes identification information of a CAG supported by a first cell. For details, refer to descriptions in the method examples. Details are not described herein again.

The apparatus 800 may further include at least one memory 820, configured to store program instructions and/or data. The memory 820 is coupled to the processor 810. Coupling in embodiments of this application is indirect coupling or a communication connection between apparatuses, units, or modules, and may be in an electrical, mechanical, or another form, and is used for information exchange between the apparatuses, units, or modules. The processor 810 may operate with the memory 820. The processor 810 may execute the program instructions stored in the memory 820. At least one of the at least one memory may be included in the processor.

The apparatus 800 may further include a communication interface 830. The communication interface 830 may be a transceiver, an interface, a bus, a circuit, or an apparatus that can implement a transceiver function. The communication interface 830 is configured to communicate with another device through a transmission medium, so that an apparatus in the apparatus 800 is configured to communicate with another device. For example, if the apparatus 800 corresponds to the terminal device #1 in the method embodiments, the another device may be an access network device. If the apparatus 800 corresponds to the access network device in the method embodiments, the another device may be the terminal device #1 and/or the AMF. If the apparatus 800 corresponds to the AMF in the method embodiments, the another device may be an access network device. The processor 810 receives and sends data through the communication interface 830, and is configured to implement the method performed by the terminal device, the access network device, and/or the AMF in the embodiments corresponding to FIG. 4 to FIG. 6.

A specific connection medium between the processor 810, the memory 820, and the communication interface 830 is not limited in this embodiment of this application. In this embodiment of this application, the memory 820, the processor 810, and the communication interface 830 are connected through a bus 840 in FIG. 8, and the bus is represented by a thick line in FIG. 8. A connection manner between other components is schematically described, and is not limited thereto. The bus may be classified into an address bus, a data bus, a control bus, or the like. For ease of indication, the bus is indicated by using only one bold line in FIG. 8. However, it does not indicate that there is only one bus or only one type of bus.

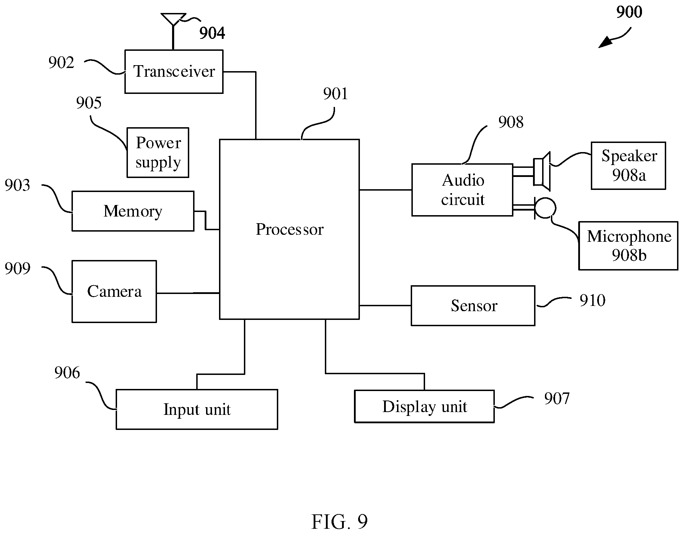

FIG. 9 is a schematic diagram of a structure of a terminal device according to an embodiment of this application. The terminal device may be used in the system shown in FIG. 1. As shown in FIG. 9, a terminal device 900 includes a processor 901 and a transceiver 902. Optionally, the terminal device 900 further includes a memory 903. The processor 901, the transceiver 902, and the memory 903 may communicate with each other by using an internal connection path, to transmit a control signal and/or a data signal. The memory 903 is configured to store a computer program. The processor 901 is configured to invoke the computer program from the memory 903 and run the computer program, to control the transceiver 902 to receive and transmit a signal. Optionally, the terminal device 900 may further include an antenna 904, configured to send, by using a radio signal, uplink data or uplink control signaling output by the transceiver 902.

The processor 901 and the memory 903 may form a processing apparatus. The processor 901 is configured to execute program code stored in the memory 903, to implement the foregoing functions. During specific implementation, the memory 903 may alternatively be integrated into the processor 901, or may be independent of the processor 901. The processor 901 may correspond to the processing module 720 in FIG. 7 or the processor 810 in FIG. 8.

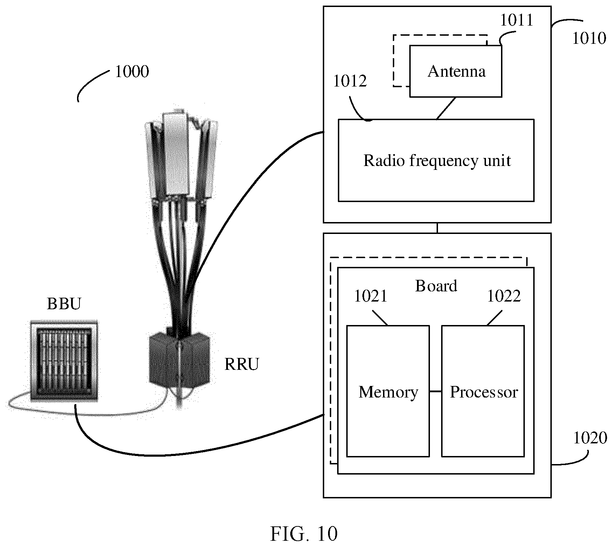

The transceiver 902 may correspond to the communication module 920 in FIG. 9 or a communication interface 1030 in FIG. 10. The transceiver 902 may include a receiver (which is also referred to as a receiver machine or a receiver circuit) and a transmitter (which is also referred to as a transmitter machine or a transmitter circuit). The receiver is configured to receive a signal, and the transmitter is configured to transmit a signal.

Optionally, the terminal device 900 may further include a power supply 905, configured to supply power to various components or circuits in the terminal device 900.

In addition, to improve functions of the terminal device, the terminal device 900 may further include one or more of an input unit 906, a display unit 907, an audio circuit 908, a camera 909, a sensor 910, and the like, and the audio circuit may further include a speaker 908a, a microphone 908b, and the like.

It should be understood that the terminal device 900 shown in FIG. 9 can implement processes related to the terminal device #1 in the method embodiments shown in FIG. 4 to FIG. 6. Operations and/or functions of modules in the terminal device 900 are separately used to implement corresponding procedures in the foregoing method embodiments. For details, refer to the descriptions in the method embodiments. To avoid repetition, detailed description is properly omitted herein.

When the terminal device 900 is configured to perform the operation procedure of the terminal device #1 in the method embodiments, the processor 901 may be configured to perform an action that is internally implemented by the terminal device #1 and that is described in the method embodiments. The transceiver 902 may be configured to perform an action, described in the method embodiments, of sending to the access network device by the terminal device #1 or receiving from the access network device. For details, refer to the descriptions in the method embodiments. Details are not described herein again.

FIG. 10 is a schematic diagram of a structure of an access network device according to an embodiment of this application. FIG. 10 is a schematic diagram of a structure of a network device according to an embodiment of this application, for example, a schematic diagram of a structure of a base station. A base station 1000 may be used in the system shown in FIG. 1. As shown in FIG. 10, the base station 1000 may include one or more radio frequency units, for example, a remote radio unit (remote radio unit, RRU) 1010 and one or more baseband units (BBU) (which may also be referred to as distributed units (DU)) 1020. The RRU 1010 may be referred to as a transceiver unit, and may correspond to the transceiver module 710 in FIG. 7 or the communication interface 830 in FIG. 8. Optionally, the RRU 1010 may also be referred to as a transceiver unit, a transceiver machine, a transceiver circuit, a transceiver, or the like, and may include at least one antenna 1011 and a radio frequency unit 1012. Optionally, the RRU 1010 may include a receiving unit and a sending unit. The receiving unit may correspond to a receiver (which is also referred to as a receiver machine or a receiver circuit), and the sending unit may correspond to a transmitter (which is also referred to as a transmitter machine or a transmitter circuit). The RRU 1010 part is mainly configured to: send and receive a radio frequency signal and perform conversion between a radio frequency signal and a baseband signal, for example, is configured to perform the operation procedure, for example, send a broadcast message, and forward a message between the terminal device #1 and the AMF, related to the access network device in the method embodiments. The BBU 1020 is mainly configured to: perform baseband processing, control a base station, and the like. The RRU 1010 and the BBU 1020 may be physically disposed together, or may be physically separated, that is, in a distributed base station.

The BBU 1020 is a control center of the base station, may also be referred to as a processing unit, may correspond to the processing module 720 in FIG. 7 or the processor 810 in FIG. 8, and is mainly configured to complete baseband processing functions, such as channel encoding, multiplexing, modulation, and spreading. For example, the BBU (the processing unit) may be configured to control the base station to perform the operation procedure, for example, generating the indication information, related to the access network device in the method embodiments. Alternatively, the BBU (the processing unit) may be configured to control the base station to perform the operation procedure related to the access network device in the method embodiments.

In an example, the BBU 1020 may include one or more boards. A plurality of boards may jointly support a radio access network (for example, an LTE network) of a single access standard, or may separately support radio access networks of different access standards (such as an LTE network, a 5G network, or another network). The BBU 1020 further includes a memory 1021 and a processor 1022. The memory 1021 is configured to store necessary instructions and data. The processor 1022 is configured to control the base station to perform a necessary action, for example, is configured to control the base station to perform the operation procedure related to the access network device in the method embodiments. The memory 1021 and the processor 1022 may serve one or more boards. In other words, the memory and the processor may be separately disposed on each board. Alternatively, a plurality of boards may share a same memory and a same processor. In addition, a necessary circuit may further be disposed on each board.

It should be understood that the base station 1000 shown in FIG. 10 can implement processes related to the access network device in the method embodiments shown in FIG. 4 to FIG. 6. Operations and/or functions of modules in the base station 1000 are separately used to implement corresponding procedures in the foregoing method embodiments. For details, refer to the descriptions in the method embodiments. To avoid repetition, detailed description is properly omitted herein.

When the base station 1000 is configured to perform the operation procedure related to the access network device in the method embodiments, the BBU 1020 may be configured to perform an action that is internally implemented by the access network device and that is described in the method embodiments, and the RRU 1010 may be configured to perform sending, receiving, and forwarding actions of the access network device that are described in the method embodiments. For details, refer to the descriptions in the method embodiments. Details are not described herein again.

It should be understood that the base station 1000 shown in FIG. 10 is merely a possible form of the access network device, and should not constitute any limitation on this application. The method provided in this application is applicable to a network device in another form. For example, the network device includes an AAU, and may further include a CU and/or a DU, or may include a BBU and an adaptive radio unit (adaptive radio unit, ARU), or a BBU. Alternatively, the network device may be customer premises equipment (customer premises equipment, CPE), or may be in another form. A specific form of the network device is not limited in this application.

This application further provides a processing apparatus, including at least one processor. The at least one processor is configured to execute a computer program stored in a memory, so that the processing apparatus performs the method performed by the terminal device #1, the method performed by the access network device, or the method performed by the AMF in the method embodiments.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the methods disclosed with reference to embodiments of this application may be directly executed and accomplished by a hardware processor, or may be executed and accomplished by using a combination of hardware and software modules in the processor.

In embodiments of this application, the memory may be a non-volatile memory, a hard disk drive (hard disk drive, HDD) or a solid-state drive (solid-state drive, SSD), or may be a volatile memory (volatile memory), for example, a random access memory (random access memory, RAM). The memory is any other medium that can be used to carry or store expected program code in a form of an instruction or a data structure and that can be accessed by a computer. However, this is not limited thereto. The memory in embodiments of this application may alternatively be a circuit or any other apparatus that can implement a storage function, and is configured to store the program instructions and/or the data.

According to the method provided by the embodiments of this application, this application further provides a computer program product. The computer program product includes computer program code. When the computer program code is run on a computer, the computer is enabled to perform the method performed by the terminal device #1, the method performed by the access network device, or the method performed by the AMF in the embodiments shown in FIG. 4 to FIG. 6.

According to the method provided by the embodiments of this application, this application further provides a computer-readable storage medium. The computer-readable storage medium stores program code. When the program code is run on a computer, the computer is enabled to perform the method performed by the terminal device #1, the method performed by the access network device, or the method performed by the AMF in the embodiments shown in FIG. 4 to FIG. 6.

According to the method in embodiments of this application, this application further provides a system, including the access network device and the AMF. Optionally, the system further includes a UDM.

All or some of the technical solutions in embodiments of this application may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to the embodiments of this invention are all or partially generated. The computer may be a general-purpose computer, a special-purpose computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, when there is no logical conflict, embodiments may be mutually referenced. For example, methods and/or terms in the method embodiments may be mutually referenced, and functions and/or terms in the apparatus embodiments may be mutually referenced. For example, functions and/or terms between the apparatus embodiments and the method embodiments may be mutually referenced.

It is clear that a person skilled in the art can make various modifications and variations to this application without departing from the scope of this application. This application is intended to cover the modifications and variations of this application, provided that they fall within the scope of the following claims and equivalent technologies of this application.

## Claims

1. A network access method, comprising:
receiving, by a terminal device, a broadcast message from an access network device, wherein the broadcast message comprises identification information of one or more closed access groups CAGs supported by a first cell and a first default network access indication, and the first default network access indication indicates that the first cell can be accessed in a default access manner; and
when a first CAG list does not comprise the identification information of the one or more CAGs supported by the first cell, accessing, by the terminal device, the first cell based on the first default network access indication, wherein the first CAG list is a list, stored in the terminal device, of identification information of a CAG that is allowed to be accessed.

2. The method according to claim 1, wherein the first default network access indication comprises identification information of a dedicated CAG for default network access.

3. The method according to claim 1 or 2, wherein the default access manner comprises an automatic selection access manner or a manual selection access manner.

4. The method according to claim 3, wherein if the default access manner is the manual selection access manner, the accessing, by the terminal device, the first cell based on the first default network access indication comprises:
displaying, by the terminal device based on the first default network access indication through a user interface, identification information of a network that can be selected; and
accessing, by the terminal device, the first cell in response to a user operation.

5. The method according to any one of claims 1 to 4, wherein the method further comprises:
receiving, by the terminal device, a second CAG list from an access and mobility management function AMF network element, wherein the second CAG list is a list, stored in a subscription database, of identification information of a CAG that the terminal device is allowed to access; and
updating, by the terminal device, the first CAG list based on the second CAG list.

6. The method according to claim 5, wherein the method further comprises:
sending, by the terminal device, a registration request message to the AMF; and
the receiving, by the terminal device, a second CAG list from an AMF comprises:
receiving, by the terminal device, a registration accept message from the AMF, wherein the registration accept message carries the second CAG list.

7. The method according to claim 5, wherein the method further comprises:
sending, by the terminal device, a registration request message to the AMF; and
the receiving, by the terminal device, a second CAG list from an AMF comprises:
receiving, by the terminal device, a registration reject message from the AMF, wherein the registration reject message carries the second CAG list.

8. The method according to claim 7, wherein the method further comprises:
selecting, by the terminal device, a second cell based on a cell reselection procedure; and
when the second CAG list comprises identification information of at least one CAG supported by the second cell, accessing, by the terminal device, the second cell, and initiating a registration procedure.

9. The method according to any one of claims 6 to 8, wherein the registration request message carries a second default network access indication, and the second default network access indication indicates that the terminal device accesses the first cell in the default access manner.

10. The method according to claim 9, wherein the second default network access indication comprises the identification information of the dedicated CAG for default network access.

11. The method according to claim 1, wherein the method further comprises:
when the first CAG list comprises the identification information of the one or more CAGs supported by the first cell, and the terminal device is set to a manual selection mode, displaying, by the terminal device based on the identification information of the one or more CAGs through a user interface, identification information of one or more networks that can be manually selected; and
accessing, by the terminal device, the first cell in response to a user operation.

12. The method according to claim 4 or 11, wherein the identification information of the networks that can be selected comprises the identification information of the one or more CAGs or HRNNs separately associated with the identification information of the one or more CAGs.

13. A network access method, comprising:
sending, by an access network device, a broadcast message, wherein the broadcast message comprises identification information of one or more closed access groups CAGs supported by a first cell and a first default network access indication, the first default network access indication indicates that the first cell can be accessed in a default access manner, and the first cell is a cell served by the access network device.

14. The method according to claim 15, wherein the first default network access indication comprises identification information of a dedicated CAG for default network access.

15. The method according to claim 13 or 14, wherein the method further comprises:
receiving, by the access network device, a registration request message from a terminal device, wherein the registration request message carries a second default network access indication, and the second default network access indication indicates that the terminal device accesses the first cell in the default access manner; and
forwarding, by the access network device, the registration request message to an access and mobility management function AMF network element.

16. The method according to claim 15, wherein the second default network access indication comprises the identification information of the dedicated CAG for default network access.

17. A network access method, comprising:
receiving, by an access and mobility management function AMF network element, a registration request message from a terminal device, wherein the registration request message carries a second default network access indication, and the second default network access indication indicates that the terminal device accesses a first cell in a default access manner;
obtaining, by the AMF, a second closed access group CAG list of the terminal device from a subscription database based on the registration request message, wherein the second CAG list comprises identification information of a CAG that the terminal device is allowed to access; and
sending, by the AMF, a registration reject message to the terminal device, wherein the registration reject message carries the second CAG list.

18. The method according to claim 17, wherein the second default network access indication comprises identification information of a dedicated CAG for default network access.

19. A network access apparatus, comprising:
a transceiver module, configured to receive a broadcast message from an access network device, wherein the broadcast message comprises identification information of one or more closed access groups CAGs supported by a first cell and a first default network access indication, and the first default network access indication indicates that the first cell can be accessed in a default access manner; and
a processing module, configured to: when a first CAG list does not comprise the identification information of the one or more CAGs supported by the first cell, access the first cell based on the first default network access indication, wherein the first CAG list is a list, stored in the apparatus, of identification information of a CAG that is allowed to be accessed.

20. The apparatus according to claim 19, wherein the first default network access indication comprises identification information of a dedicated CAG for default network access.

21. The apparatus according to claim 19 or 20, wherein the default access manner comprises an automatic selection access manner or a manual selection access manner.

22. The apparatus according to claim 21, wherein if the default access manner is the manual selection access manner, the processing module is further configured to:
display, based on the first default network access indication through a user interface, identification information of a network that can be selected; and
access the first cell in response to a user operation.

23. The apparatus according to any one of claims 19 to 22, wherein the transceiver module is further configured to receive a second CAG list from an access and mobility management function AMF network element, wherein the second CAG list is a list, stored in a subscription database, of identification information of a CAG that the apparatus is allowed to access; and
the processing unit is further configured to update the first CAG list based on the second CAG list.

24. The apparatus according to claim 23, wherein the transceiver module is specifically configured to:
send a registration request message to the AMF; and
receive a registration accept message from the AMF, wherein the registration accept message carries the second CAG list.

25. The apparatus according to claim 23, wherein the transceiver module is specifically configured to:
send a registration request message to the AMF; and
receive a reject message from the AMF, wherein the registration reject message carries the second CAG list.

26. The apparatus according to claim 25, wherein the processing module is further configured to:
select a second cell based on a cell reselection procedure; and
when the second CAG list comprises identification information of at least one CAG supported by the second cell, access the second cell, and initiate a registration procedure.

27. The apparatus according to any one of claims 24 to 26, wherein the registration request message carries a second default network access indication, and the second default network access indication indicates that the apparatus accesses the first cell in the default access manner.

28. The apparatus according to claim 27, wherein the second default network access indication comprises the identification information of the dedicated CAG for default network access.

29. The apparatus according to claim 19, wherein the processing module is further configured to:
when the first CAG list comprises the identification information of the one or more CAGs supported by the first cell, and the apparatus is set to a manual selection mode, display, based on the identification information of the one or more CAGs through a user interface, identification information of one or more networks that can be manually selected; and
access the first cell in response to a user operation.

30. The apparatus according to claim 22 or 29, wherein the identification information of the networks that can be selected comprises the identification information of the one or more CAGs or HRNNs separately associated with the identification information of the one or more CAGs.

31. A network access apparatus, comprising a processor and a memory, wherein the memory is coupled to the processor, and the processor is configured to perform the method according to any one of claims 1 to 12.

32. A network access apparatus, configured to perform the method according to any one of claims 13 to 16.

33. A network access apparatus, comprising a processor and a memory, wherein the memory is coupled to the processor, and the processor is configured to perform the method according to any one of claims 13 to 16.

34. A network access apparatus, configured to perform the method according to claim 17 or 18.

35. A network access apparatus, comprising a processor and a memory, wherein the memory is coupled to the processor, and the processor is configured to perform the method according to claim 17 or 18.

36. A computer-readable storage medium, comprising instructions, wherein when the instructions are run on a computer, the computer is enabled to perform the method according to any one of claims 1 to 18.

37. A computer program, comprising program code, wherein when a computer runs the computer program, the program code performs the method according to any one of claims 1 to 18.
